# EUROPÄISCHE PATENTSCHRIFT

(11) **EP 3 585 047 B1**
(45) Veröffentlichungstag und Bekanntmachung des Hinweises auf die Patenterteilung: **24.03.2021**
(21) Anmeldenummer: 18178777.1
(22) Anmeldetag: 20.06.2018
(51) Int. Cl.: H04N 5/235

(54) **VERFAHREN UND VORRICHTUNG ZUR ERSTELLUNG VON HOCHKONTRASTBILDERN**
METHOD AND DEVICE FOR PRODUCING HIGH CONTRAST IMAGES
PROCÉDÉ ET DISPOSITIF DE GÉNÉRATION D'IMAGES À DYNAMIQUE ÉLEVÉE

(43) Veröffentlichungstag der Anmeldung: 25.12.2019
(73) Patentinhaber: ZKW Group GmbH, 3250 Wieselburg (AT)
(72) Erfinder: Baker, Julian, 3240 Mank (AT); Brunner, Michael, 3650 Pöggstall (AT); Artmann, Matthäus, 3370 Ybbs an der Donau (AT)
(74) Vertreter: Patentanwaltskanzlei Matschnig & Forsthuber OG

(56) Entgegenhaltungen:
- US-A1- 2017 142 312
- US-B2- 6 960 005
- LEHMAN BRAD ET AL: "Designing to Mitigate Effects of Flicker in LED Lighting: Reducing risks to health and safety", IEEE POWER ELECTRONICS MAGAZINE, IEEE, USA, vol. 1, no. 3, 1 September 2014 (2014-09-01), pages 18-26, XP011558161, ISSN: 2329-9207, DOI: 10.1109/MPEL.2014.2330442 [retrieved on 2014-09-04]

## Beschreibung

Die Erfindung ist durch die beigefügten unabhängigen Ansprüche definiert und wird nach dem Lesen der folgenden detaillierten Beschreibung in Verbindung mit den beigefügten Zeichnungen besser verstanden.

Die Erfindung betrifft ein Verfahren zur Erhöhung des Kontrastumfangs von Bildern einer Umgebung.

Die Erfindung betrifft weiters ein Kraftfahrzeug, welches eingerichtet ist, das erfindungsgemäße Verfahren auszuführen.

Die Erfindung betrifft ferner einen Kraftfahrzeugscheinwerfer, welcher eingerichtet ist, das erfindungsgemäße Verfahren auszuführen.

US 2017/0142312 A1 betrifft ein System und Verfahren zur Tiefenerfassung mit hohem Dynamikbereich unter Verwendung mehrerer Kameras. US 6960005 B2 betrifft eine Fahrzeugscheinwerfervorrichtung mit einem Scheinwerfer zum Beleuchten vor einem Fahrzeug, einer Bildaufnahmeeinrichtung zum Aufnehmen eines Bildes vor dem Fahrzeug, einer Straßenabschlußende- Bestimmungseinrichtung zum Bestimmen eines Endes einer Straße vor dem Fahrzeug aus dem von der Bildaufnahmeeinrichtung aufgenommenen Bild, und einer Lichtverteilungs-Steuereinrichtung zum Verändern der Lichtverteilung des Scheinwerfers, um eine Stelle zu beleuchten, die von der Straßenabschlußende- Bestimmungseinrichtung als das Ende der Straße bestimmt wird.

Kraftfahrzeuge sind heutzutage in der Regel mit Objekt erkennenden Systemen bzw. Vorrichtungen ausgestattet, die es erlauben, Objekte zu erkennen und darauf entsprechend zu reagieren.

Beispielweise können vorausfahrende Fahrzeuge im Straßenverkehr erkannt werden bzw. deren Abstand ermittelt werden, sodass das Kraftfahrzeug gegebenenfalls selbstständig einen Bremsvorgang und/oder einen Beschleunigungsvorgang einleiten kann.

Ferner können beispielsweise Objekte oder Fußgänger auf einem Fahrbahnrand erkannt werden, wobei das Kraftfahrzeug vorzugsweise über eine Signalisierungsvorrichtung entsprechende Lichtverteilungen auf den Boden projizieren kann, beispielsweise eine Signalisierung, welche den Fußgänger auffordert stehen zu bleiben bzw. die Straße zu überqueren.

Insbesondere auf nicht beleuchteten Straßen bzw. Fahrbahnen bei Nacht kann eine solche Objekt erkennende Vorrichtung den Fahrer unterstützen, um beispielsweise Querungen von Wild rechtzeitig zu erkennen und gegebenenfalls einen Bremsvorgang einzuleiten.

Hierzu sind solche Vorrichtungen mit einem Bildaufnahmesystem mit einem Bildsensor ausgestattet, welcher Bildaufnahmen der näheren Umgebung bzw. der Umgebung der Vorrichtung aufnimmt, welche zur weiteren Objekterkennung dienen.

Jedoch reichen die Kontrastverhältnisse einer einzigen von dem Bildaufnahmesystem aufgenommenen Bildaufnahme oft nicht aus, um ein Objekt sicher zu erkennen, beispielsweise bei schlechter Beleuchtung bzw. unterschiedlichen Kontrastverhältnissen, wie Blendungen oder Übersteuerung des Bildsensors.

Während einer Belichtungszeit für eine Bildaufnahme integriert der Bildsensor das auf den Bildsensor treffende Licht. Trifft zu viel Licht auf den Bildsensor, so übersteuert dieser und Objekte können nicht mehr zuverlässig erkannt werden. Trifft zu wenig Licht auf den Bildsensor, kann aufgrund von einem zu geringen Kontrastumfang ebenfalls kein Objekt identifiziert werden.

Deshalb werden - um bei schlechten Bedingungen ebenfalls sicher Objekte erkennen zu können - von dem Bildaufnahmesystem mehrere Bildaufnahmen erstellt, zumindest jedoch zwei Bildaufnahmen, welche einen unterschiedlichen Kontrastumfang aufweisen müssen. Hierzu wird die Umgebung beispielsweise durch ein Leuchtmittel zusätzlich beleuchtet, um die Lichtmenge für den Bildsensor zu erhöhen und kontrastreichere Bilder zu erhalten.

Der unterschiedliche Kontrastumfang je Bildaufnahme wird beispielsweise durch unterschiedliche Belichtungszeiten des Bildsensors erhalten. Durch Variationen der Belichtungszeit können Bildaufnahmen mit unterschiedlichem Kontrastumfang erzeugt werden.

Anschließend werden zumindest zwei Bildaufnahmen zu einem Hochkontrastbild bzw. einer Bildkomposition überlagert.

Es ist eine Aufgabe der Erfindung, ein verbessertes Verfahren zur Erhöhung des Kontrastumfangs von Bildern einer Umgebung bereitzustellen.

Diese Aufgabe wird mit einem Verfahren gelöst, welches folgende Schritte umfasst:
a) Bereitstellen eines Leuchtmittels, welches zumindest einen ersten und einen zweiten Zustand mit jeweils unterschiedlichem Lichtstrom, beispielsweise einen eingeschalteten und einen ausgeschalteten Zustand, einnehmen kann, einer Verarbeitungseinheit und eines Bildaufnahmesystems mit zumindest einem lichtsensitiven Bildsensor,
b) Erstellen von Bildaufnahmen der Umgebung mittels dem Bildaufnahmesystem, wobei der zumindest eine Bildsensor in einer vorgebbaren Belichtungsperiode belichtet wird, wobei innerhalb einer Belichtungsperiode zumindest eine erste und eine zweite Bildaufnahme mit je einer festlegbaren Belichtungszeit erstellt werden, wobei das Leuchtmittel in einer vorgebbaren Beleuchtungsperiode, welche sich aus der Dauer des ersten und des zweiten Zustands zusammensetzt, in seinen ersten und dann in seinen zweiten Zustand versetzt wird, wobei die Beleuchtungsperiode des Leuchtmittels länger oder kürzer ist als die Belichtungsperiode des Bildaufnahmesystems, sodass die erste und die zweite Bildaufnahme einen unterschiedlichen Kontrastumfang aufweisen,
c) Erstellen von zumindest einer Bildkomposition mittels der Verarbeitungseinheit, wobei die zumindest eine erste und zweite Bildaufnahme einer Belichtungsperiode überlagert werden, wobei die zumindest eine Bildkomposition einen im Vergleich zu der zumindest einen ersten und zweiten Bildaufnahme größeren Kontrastumfang aufweist.

Es sei angemerkt, dass die Beleuchtungsperiode gleichzeitig mit der Belichtungsperiode bzw. umgekehrt abläuft. Damit ist gemeint, dass die Belichtungsperiode nicht erst dann abläuft, nachdem die Beleuchtungsperiode abgelaufen ist und die Umgebung damit nicht mehr durch das Leuchtmittel beleuchtet wird. Vielmehr läuft die Belichtungsperiode ab, wenn die Umgebung durch das Leuchtmittel in der Beleuchtungsperiode beleuchtet wird bzw. wenn die Beleuchtungsperiode abläuft.

Durch die Beleuchtungsperiode des Leuchtmittels ist es möglich, die Lichtleistung bzw. Lichtstrom im ersten oder zweiten Zustand des Leuchtmittels zu erhöhen, ohne den gesamten Energieverbrauch des Leuchtmittels während einer Beleuchtungsperiode zu erhöhen, wobei bei einer höheren Lichtleistung auch die Ausleuchtung der Umgebung, beispielweise die Reichweite, erhöht wird. Dies führt beispielsweise zu einer früheren Erkennung von Objekten und einer erhöhten Sicherheit für einen Fahrer.

Es kann überdies vorgesehen sein, dass das Bildaufnahmesystem und das Leuchtmittel derart über eine Verbindungsleitung miteinander verbunden sind, dass bei Aktivierung des Leuchtmittels ein Signal über die Verbindungsleitung an das Bildaufnahmesystem übermittelt wird, wodurch das Bildaufnahmesystem ebenfalls aktiviert wird.

Mit "Lichtstrom" wird im Allgemeinen die Strahlung beschrieben, die Lichtquellen bzw. Leuchtmittel in Form von sichtbarem Licht abgeben. Der Lichtstrom wird üblicherweise in der Einheit Lumen (lm) angegeben.

Als "Lichtmenge" wird das Produkt der Zeitdauer t und der während der Zeitdauer t zeitlich konstant abgegebene Lichtstrom eines Leuchtmittels bzw. Lichtquelle bezeichnet.

Beispielsweise kann der erste Zustand einem eingeschalteten Zustand und der zweite Zustand einem ausgeschalteten Zustand des Leuchtmittels entsprechen, wobei der eingeschaltete Zustand einen Lichtstrom von größer Null und der ausgeschaltete Zustand einen Lichtstrom von Null aufweist.

Unter "Belichtungszeit" kann die Zeitspanne verstanden werden, in der ein Licht empfindliches Medium - beispielsweise ein Bildsensor - zur Aufzeichnung eines Bildes bzw. Lichtbildes dem vorhandenen Licht ausgesetzt wird.

Eine zu kurze Belichtungszeit führt in der Regel zu unterbelichteten (zu dunklen) Bildern, eine zu lange Belichtungszeit zu überbelichteten (zu hellen) Bildern.

Der Begriff "Kontrastumfang" - auch Dynamikumfang genannt - bezeichnet in allgemeinen technischen, physikalischen oder mathematischen Zusammenhängen den Quotienten aus Maximum und Minimum einer physikalischen Größe oder Funktion.

Der Kontrastumfang als Verhältnis aus Minimal- zu Maximalkontrast wird beispielsweise als Blendenstufen, dem Logarithmus zur Basis 2, angegeben.

Hochkontrastbilder können aus einer Belichtungsreihe von gewöhnlichen Bildern mit geringem Dynamikumfang erstellt werden. Hierbei werden die einzelnen Aufnahmen so miteinander kombiniert, dass der Motivkontrast nahezu vollständig bzw. verbessert erfasst und absolute Helligkeitswerte gespeichert werden.

In der Fotografie ist auch die Angabe des Dynamik- bzw. Kontrastumfangs in Lichtwerten LW üblich. Lichtwert LW bzw. Exposure Value EV ist in der Fotografie ein logarithmisches Maß, das sich auf die Belichtung einer Aufnahme bezieht.

Vorteilhafterweise können die Belichtungszeiten zur Erstellung der zumindest einen ersten und zweiten Bildaufnahme gleich lang sein.

Ebenso kann es günstig sein, wenn die Belichtungszeiten zur Erstellung der zumindest einen ersten und zweiten Bildaufnahme unterschiedlich lang sind.

Es kann vorgesehen sein, dass das Bildaufnahmesystem einen weiteren Bildsensor aufweist, wobei der erste Bildsensor die erste Bildaufnahme erstellt und der weitere Bildsensor die zweite Bildaufnahme in einer Belichtungsperiode erstellt.

Mit Vorteil kann vorgesehen sein, dass die erste und die zweite Bildaufnahme gleichzeitig im Sinne eines gemeinsamen Startpunktes mit unterschiedlichen Belichtungszeiten erstellt werden.

Hierbei ist mit dem Begriff "gleichzeitig" vor allem ein gemeinsamer Startpunkt der entsprechenden Belichtungszeiten gemeint.

Es ist vorgesehen, dass das Leuchtmittel zumindest eine Leuchtdiode umfasst, welche dimmbar ist, mittels einer Pulsweitenmodulation.

Bei einer Pulsweitenmodulation wird bei konstanter Frequenz der Tastgrad eines Rechteckpulses moduliert, also die Breite der den Rechteckpuls bildenden Impulse. Beispielsweise nimmt bei ausreichend kurzer Ein- und Ausschaltdauer das menschliche Auge nur die durchschnittliche Leuchtstärke wahr. Dabei ist darauf zu achten, dass die Taktfrequenz ausreichend hoch angesetzt ist, beispielsweise 10 kHz, sodass das menschliche Auge auch bei schneller Bewegung keine Helligkeitsschwankungen wahrnehmen kann.

Bei hohen Schaltfrequenzen bleibt auch die Energie eines Einzelimpulses klein in Bezug auf die Wärmekapazität der Licht emittierenden Leuchtdiode. Die kurzzeitige Spitzentemperatur des Bauteils bzw. der Leuchtdiode verbleibt daher bei hohen Schaltfrequenzen nahe der Temperatur, welche der mittleren Leistung des PWM-Signals entspricht.

In einer zweckmäßigen Ausführungsform kann vorgesehen sein, dass die Belichtungsperiode und die Beleuchtungsperiode jeweils wiederholt bzw. unmittelbar aufeinanderfolgend wiederholt ablaufen.

Es ist vorgesehen, dass das Leuchtmittel als Kraftfahrzeugscheinwerfer ausgebildet ist.

Hierbei ist vorgesehen, dass die Frequenz der Lichtabgabe des Kraftfahrzeugscheinwerfers höher als 60Hz ist, um den Eindruck des Flackerns für das menschliche Auge zu reduzieren bzw. zu vermeiden.

In der Ausführungsform ist vorgesehen, dass das Leuchtmittel, die Verarbeitungseinheit und das Bildaufnahmesystem in einem Kraftfahrzeug, vorzugsweise in einem Kraftfahrzeugscheinwerfer, welcher in einem Kraftfahrzeug verbaut ist, eingebaut ist. Der Kraftfahrzeug umfasst hierbei ein Leuchtmittel, welches zumindest einen ersten und einen zweiten Zustand mit jeweils unterschiedlichem Lichtstrom, beispielsweise einen eingeschalteten und einen ausgeschalteten Zustand, einnehmen kann, ein Bildaufnahmesystem mit zumindest einem lichtsensitiven Sensor, welches eingerichtet ist, Bildaufnahmen der Umgebung zu erstellen, und eine Verarbeitungseinheit, welche eingerichtet ist, eine Bildkomposition der von dem Bildaufnahmesystem erstellten Bildaufnahmen zu erstellen, wobei der zumindest eine Bildsensor hierzu in einer vorgebaren Belichtungsperiode belichtet wird, wobei innerhalb einer Belichtungsperiode zumindest eine erste und eine zweite Bildaufnahme mit je einer festlegbaren Belichtungszeit erstellt werden, wobei das Leuchtmittel in einer vorgebbaren Beleuchtungsperiode in seinen ersten und dann in seinen zweiten Zustand versetzt wird, wobei die Beleuchtungsperiode des Leuchtmittels länger oder kürzer ist als die Belichtungsperiode des Bildaufnahmesystems, sodass die erste und die zweite Bildaufnahme einen unterschiedlichen Kontrastumfang aufweisen, wobei die Verarbeitungseinheit die zumindest eine erste und eine zweite Bildaufnahme zu zumindest einer Bildkomposition überlagert, wobei die zumindest eine Bildkomposition einen im Vergleich zu der zumindest einen ersten und zweiten Bildaufnahme größeren Kontrastumfang aufweist.

Hierbei kann es günstig sein, wenn als Leuchtmittel zumindest ein, vorzugsweise beide Kraftfahrzeugscheinwerfer fungieren.

Es sei angemerkt, dass die obigen unterschiedlichen Ausführungsformen des erfindungsgemäßen Verfahrens ebenso für das erfindungsgemäße Kraftfahrzeug bzw. Kraftfahrzeugscheinwerfer gültig sind.

Es kann günstig sein, wenn die Belichtungsperiode und die Beleuchtungsperiode entsprechend einer Fahrgeschwindigkeit des Kraftfahrzeuges anpassbar sind.

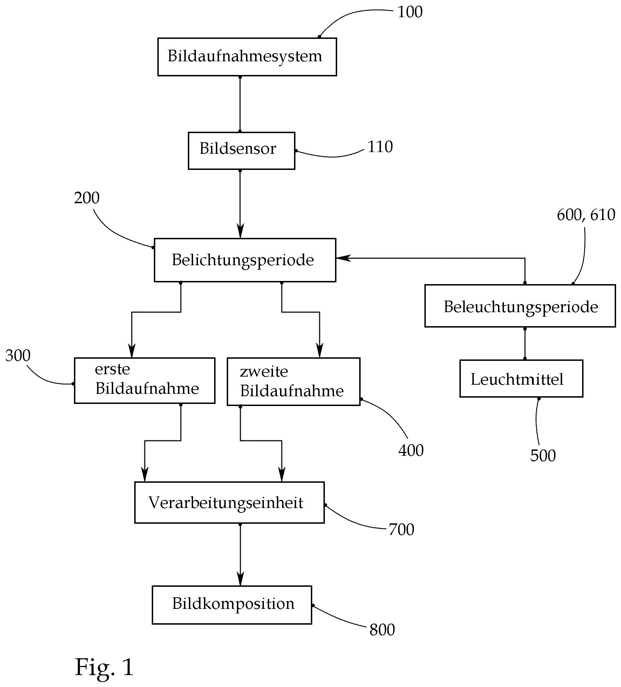

Es wird die Länge der Beleuchtungsperiode und/oder die Belichtungsperiode bei höheren Fahrgeschwindigkeiten verkürzt, bei niedrigeren Fahrgeschwindigkeiten erhöht. Nachfolgend wird die Erfindung anhand von beispielhaften Zeichnungen näher erläutert. Hierbei zeigt
Fig. 1 zeigt ein beispielhaftes Verfahren zur Erstellung von Hochkontrastbildern einer Umgebung,

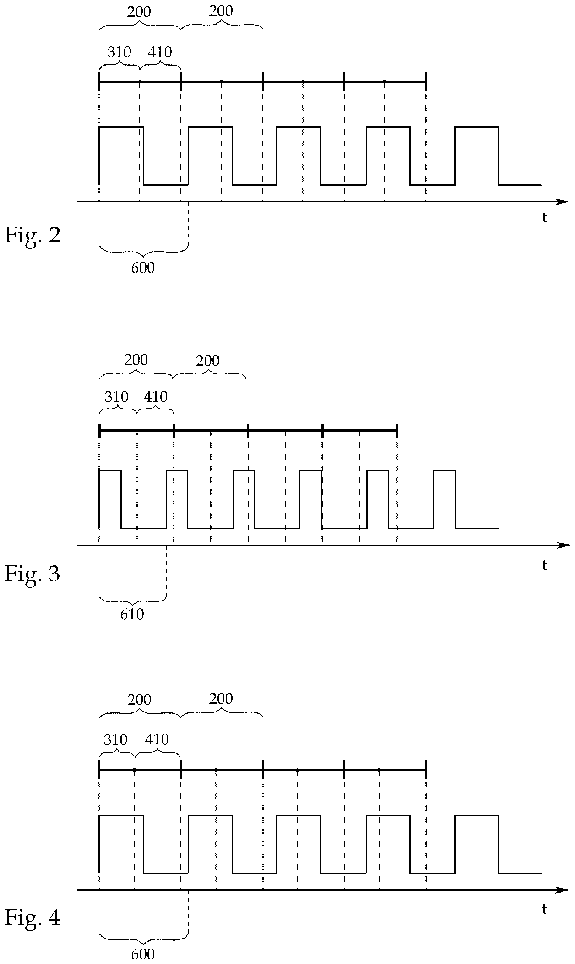

Fig. 2 beispielhafte Beleuchtungsperioden eines Leuchtmittels, welche hintereinander ablaufen, wobei sich eine Beleuchtungsperiode aus einem gleich langen ersten und zweiten Zustand zusammensetzt, wobei in einer Beleuchtungsperiode eine Belichtungsperiode mit einer ersten und einer zweiten Belichtungszeit, welche gleich lang sind, abläuft,
Fig. 3 beispielhafte Beleuchtungsperioden eines Leuchtmittels, welche hintereinander ablaufen, wobei sich eine Beleuchtungsperiode aus einem unterschiedlichen langen ersten und zweiten Zustand zusammensetzt, wobei während einer Beleuchtungsperiode eine Belichtungsperiode mit einer ersten und einer zweiten Belichtungszeit, welche gleich lang sind, abläuft,
Fig. 4 beispielhafte Beleuchtungsperioden eines Leuchtmittels, welche hintereinander ablaufen, wobei sich eine Beleuchtungsperiode aus einem gleich langen ersten und zweiten Zustand zusammensetzt, wobei während einer Beleuchtungsperiode eine Belichtungsperiode mit einer ersten und einer zweiten Belichtungszeit, welche unterschiedlich lang sind, abläuft,

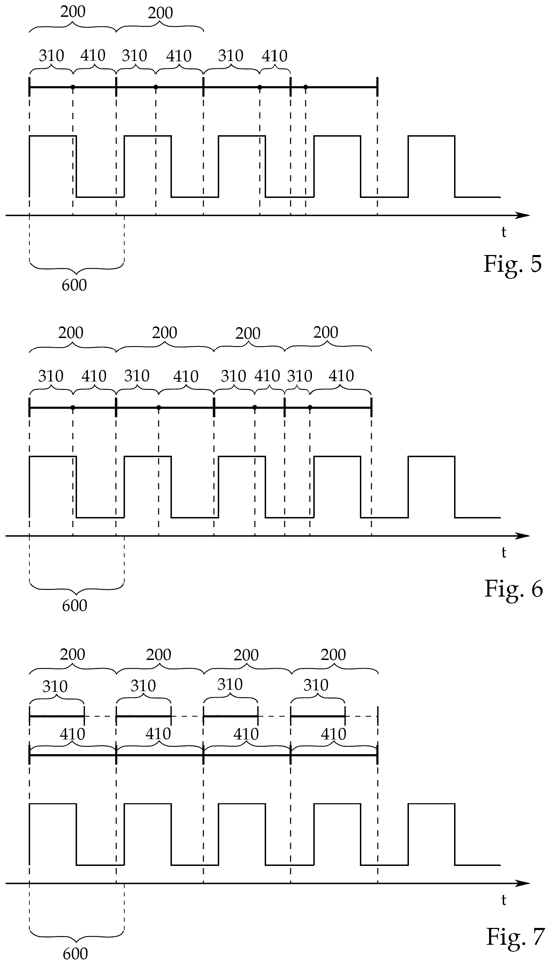

Fig. 5 beispielhafte Beleuchtungsperioden eines Leuchtmittels, welche hintereinander ablaufen, wobei sich eine Beleuchtungsperiode aus einem gleich langen ersten und zweiten Zustand zusammensetzt, wobei während einer Beleuchtungsperiode eine Belichtungsperiode mit einer ersten und einer zweiten Belichtungszeit, welche unterschiedlich lang sein können, abläuft,
Fig. 6 beispielhafte Beleuchtungsperioden eines Leuchtmittels, welche hintereinander ablaufen, wobei sich eine Beleuchtungsperiode aus einem gleich langen ersten und zweiten Zustand zusammensetzt, wobei während einer Beleuchtungsperiode eine Belichtungsperiode mit einer ersten und einer zweiten Belichtungszeit, welche unterschiedlich lang sein können, abläuft, und wobei die Belichtungsperioden unterschiedlichen lang sein können, und
Fig. 7 beispielhafte Beleuchtungsperioden eines Leuchtmittels, welche hintereinander ablaufen, wobei sich eine Beleuchtungsperiode aus einem gleich langen ersten und zweiten Zustand zusammensetzt, wobei während einer Beleuchtungsperiode eine Belichtungsperiode mit einer ersten und einer zweiten Belichtungszeit abläuft, welche unterschiedlich lang sein können und gleichzeitig ablaufen.

**Fig. 1** zeigt ein beispielhaftes Verfahren zur Erstellung von Hochkontrastbildern einer Umgebung. Hierbei wird ein Leuchtmittel **500,** welches zumindest einen ersten und einen zweiten Zustand mit jeweils unterschiedlichem Lichtstrom, beispielsweise einen eingeschalteten und einen ausgeschalteten Zustand, aufweist, eine Verarbeitungseinheit **700** und ein Bildaufnahmesystem **100** mit zumindest einem lichtsensitiven Bildsensor **110** bereitgestellt.

Das Leuchtmittel **500** umfasst zumindest eine Leuchtdiode, welche mittels einer Pulsweitenmodulation dimmbar ist.

Zur Erstellung von Bildaufnahmen **300, 400** der Umgebung mittels dem Bildaufnahmesystem **100** wird der zumindest eine Bildsensor **110** in einer vorgebbaren Belichtungsperiode **200** belichtet, wobei innerhalb einer Belichtungsperiode **200** zumindest eine erste und eine zweite Bildaufnahme **300, 400** mit je einer festlegbaren Belichtungszeit erstellt werden.

Während der Belichtungsperiode **200** wird das Leuchtmittel **500** in einer vorgebbaren Beleuchtungsperiode **600, 610** in den ersten und dann in den zweiten Zustand versetzt, wobei die Beleuchtungsperiode **600, 610** des Leuchtmittels **500** länger oder kürzer sein kann als die Belichtungsperiode **200** des Bildaufnahmesystems **100,** sodass die erste und die zweite Bildaufnahme **300, 400** einen unterschiedlichen Kontrastumfang aufweisen.

Anschließend wird mittels der Verarbeitungseinheit **700** eine Bildkomposition **800** aus der ersten und zweiten Bildaufnahme **300, 400** erstellt, wobei die zumindest eine erste und zweite Bildaufnahme **300, 400** hierzu überlagert werden.

Die Bildkomposition **800** weist dadurch einen im Vergleich zu der zumindest einen ersten und zweiten Bildaufnahme **300, 400** größeren Kontrastumfang auf.

**Fig. 2** zeigt beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 2** gleich lang sind.

Ferner sind eine erste und eine zweite Belichtungszeit **310, 410** des Bildsensors **110** zur Erstellung einer ersten und einer zweiten Bildaufnahme **300, 400** gezeigt, welche Belichtungszeiten **310, 410** in dem gezeigten Beispiel gleich lang sind. Die erste und die zweite Belichtungszeit **310, 410,** welche in diesem Beispiel hintereinander bzw. unmittelbar hintereinander ablaufen, bilden eine Belichtungsperiode **200.**

Wie zu erkennen ist, wird der Bildsensor in den ersten Belichtungszeiten zur Erstellung einer ersten Bildaufnahme jeweils mit einer unterschiedlichen Lichtmenge belichtet. Dies gilt ebenso für die zweiten Belichtungszeiten zur Erstellung einer zweiten Bildaufnahme in einer Belichtungsperiode **200.**

Dadurch werden in hintereinander bzw. unmittelbar hintereinander ablaufenden Belichtungsperioden **200** erste und zweite Bildaufnahmen mit jeweils unterschiedlichen Kontrastumfang erstellt.

**Fig. 3** zeigt weitere beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 3** unterschiedlich lang sind.

Die gezeigten ersten und zweiten Belichtungszeiten **310, 410,** welche eine Belichtungsperiode **200** bilden, sind wie in dem vorangehenden Beispiel aus **Fig. 2** gleich lang.

**Fig. 4** zeigt weitere beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 4** gleich lang ist, wie in dem Beispiel aus **Fig. 2****.**

Die gezeigten ersten und zweiten Belichtungszeiten **310, 410,** welche eine Belichtungsperiode **200** bilden, weisen eine unterschiedliche Zeitdauer auf.

**Fig. 5** zeigt weitere beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 5** gleich lang ist, wie in dem Beispiel aus **Fig. 2****.**

Im Gegensatz zu den vorherigen Beispielen variieren die erste und die zweite Belichtungszeit **310, 410** zur Erstellung einer ersten und einer zweiten Bildaufnahme in jeder hintereinander ablaufenden Belichtungsperiode **200,** wobei die Belichtungsperioden **200** trotz der variierenden Belichtungszeiten **310, 410** eine gleiche Zeitdauer aufweisen.

**Fig. 6** zeigt weitere beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 6** gleich lang ist, wie in dem Beispiel aus **Fig. 2****.**

Ähnlich wie in dem Beispiel aus **Fig. 5** variieren die erste und die zweite Belichtungszeit **310, 410** einer Belichtungsperiode **200,** wobei im Gegensatz zu dem Beispiel aus **Fig. 4** auch die Belichtungsperioden **200** hinsichtlich ihrer Dauer variieren.

Es sei angemerkt, dass die gezeigten Beispiele hinsichtlich der Kombinationen aus Belichtungszeiten, Belichtungsperioden und Beleuchtungsperioden nicht abschließend und untereinander ebenfalls noch kombinierbar sind.

Die gezeigten Beispiele sowie Kombinationen der gezeigten Beispiele sind beispielsweise hinsichtlich einer Fahrgeschwindigkeit eines Kraftfahrzeuges, in welchem das bereitgestellte Leuchtmittel, die Verarbeitungseinheit und das Bildaufnahmesystem verbaut sind, vorzugsweise in einem Kraftfahrzeugscheinwerfer eingebaut, anpassbar.

Beispielsweise wird die Beleuchtungsperiode und/oder die Belichtungsperiode bei höheren Fahrgeschwindigkeiten verkürzt, bei niedrigeren Fahrgeschwindigkeiten erhöht.

Es kann vorgesehen sein, dass das Bildaufnahmesystem **100** einen weiteren Bildsensor **120** aufweist, wobei der erste Bildsensor **110** die erste Bildaufnahme **300** erstellt und der weitere Bildsensor **120** die zweite Bildaufnahme **400** einer Belichtungsperiode **200** erstellt.

Hierzu zeigt **Fig. 7** beispielhafte, vorgebbare Beleuchtungsperioden **600** eines Leuchtmittels **500,** wobei das Leuchtmittel in einer Beleuchtungsperiode **600** in einen ersten und dann in einen zweiten Zustand versetzt wird, welche Beleuchtungsperioden **600** gegen die Zeit t aufgetragen ist, und wobei der erste und der zweite Zustand in dem gezeigten Beispiel in **Fig. 7** gleich lang ist, wie in dem Beispiel aus **Fig. 2****.**

Ferner ist eine Belichtungsperiode **200** aus einer ersten und einer zweiten Belichtungszeit **310, 410** gebildet, wobei die erste und die zweite Bildaufnahme **300, 400** gleichzeitig mit unterschiedlichen Belichtungszeiten **310, 410** erstellt werden.

Hierbei ist mit dem Begriff "gleichzeitig" vor allem ein gemeinsamer Startpunkt der entsprechenden Belichtungszeiten **310, 410** gemeint, wobei die Dauer einer Belichtungsperiode **200** mit der Dauer der längsten Belichtungszeit - in dem in **Fig. 7** gezeigten Beispiel die zweite Belichtungszeit **410** - äquivalent ist.

### BEZUGSZEICHENLISTE

- Bildaufnahmesystem...: 100
- Bildsensor...: 110
- Belichtungsperiode...: 200
- Erste Bildaufnahme...: 300
- Belichtungszeit...: 310,410
- Zweite Bildaufnahme...: 400
- Leuchtmittel...: 500
- Beleuchtungsperiode...: 600,610
- Verarbeitungseinheit...: 700
- Bildkomposition...: 800

## Patentansprüche

1. Verfahren zur Erhöhung des Kontrastumfangs von Bildern einer Umgebung, welches Verfahren folgende Schritte umfasst:
a) Bereitstellen eines Leuchtmittels (500), welches zumindest einen ersten und einen zweiten Zustand mit jeweils unterschiedlichem Lichtstrom, beispielsweise einen eingeschalteten und einen ausgeschalteten Zustand, einnehmen kann, einer Verarbeitungseinheit (700) und eines Bildaufnahmesystems (100) mit zumindest einem lichtsensitiven Bildsensor (110),
b) Erstellen von Bildaufnahmen (300, 400) der Umgebung mittels dem Bildaufnahmesystem (100), wobei der zumindest eine Bildsensor (110) in einer vorgebbaren Belichtungsperiode (200) belichtet wird, wobei innerhalb einer Belichtungsperiode (200) zumindest eine erste und eine zweite Bildaufnahme (300, 400) mit je einer festlegbaren Belichtungszeit (310, 410) erstellt werden, wobei das Leuchtmittel (500) in einer vorgebbaren Beleuchtungsperiode (600, 610), welche sich aus der Dauer des ersten und des zweiten Zustands zusammensetzt, in seinen ersten und dann in seinen zweiten Zustand versetzt wird, wobei die Beleuchtungsperiode (600, 610) des Leuchtmittels (500) länger oder kürzer ist als die Belichtungsperiode (200) des Bildaufnahmesystems (100), sodass die erste und die zweite Bildaufnahme (300, 400) einen unterschiedlichen Kontrastumfang aufweisen,
c) Erstellen von zumindest einer Bildkomposition (800) mittels der Verarbeitungseinheit (700), wobei die zumindest eine erste und zweite Bildaufnahme (300, 400) einer Belichtungsperiode überlagert werden, wobei die zumindest eine Bildkomposition (800) einen im Vergleich zu der zumindest einen ersten und zweiten Bildaufnahme (300, 400) größeren Kontrastumfang aufweist, **dadurch gekennzeichnet, dass**
das Leuchtmittel (500) zumindest eine Leuchtdiode umfasst, welche dimmbar ist, mittels einer Pulsweitenmodulation, wobei das Leuchtmittel (500) als Kraftfahrzeugscheinwerfer ausgebildet ist, und wobei die Frequenz der Lichtabgabe mittels Pulsweitenmodulation höher als 60 Hz ist, und wobei
das Leuchtmittel (500), die Verarbeitungseinheit (700) und das Bildaufnahmesystem (100) in einem Kraftfahrzeug, vorzugsweise in einem Kraftfahrzeugscheinwerfer, welcher in einem Kraftfahrzeug verbaut ist, eingebaut ist, wobei
die Länge der Beleuchtungsperiode und der Belichtungsperiode bei einem Erhöhen der Fahrgeschwindigkeit verkürzt und bei einem Reduzieren der Fahrgeschwindigkeit erhöht wird.

2. Verfahren nach Anspruch 1, **dadurch gekennzeichnet, dass** die Belichtungszeiten (310, 410) zur Erstellung der zumindest einen ersten und zweiten Bildaufnahme (300, 400) in einer Belichtungsperiode (200) gleich lang sind.

3. Verfahren nach Anspruch 1, **dadurch gekennzeichnet, dass** die Belichtungszeiten (320, 420) zur Erstellung der zumindest einen ersten und zweiten Bildaufnahme (300, 400) in einer Belichtungsperiode (200) unterschiedlich lang sind.

4. Verfahren nach einem der Ansprüche 1 bis 3, **dadurch gekennzeichnet, dass** das Bildaufnahmesystem (100) einen weiteren Bildsensor (120) aufweist, wobei der erste Bildsensor (110) die erste Bildaufnahme (300) erstellt und der weitere Bildsensor (120) die zweite Bildaufnahme (400) in einer Belichtungsperiode (200) erstellt.

5. Verfahren nach Anspruch 4, **dadurch gekennzeichnet, dass** die zumindest eine erste und die zweite Bildaufnahme (300, 400) gleichzeitig im Sinne eines gemeinsamen Startpunktes mit unterschiedlichen Belichtungszeiten (310, 410) erstellt werden.

6. Verfahren nach einem der Ansprüche 1 bis 5, **dadurch gekennzeichnet, dass** die Belichtungsperiode (200) und die Beleuchtungsperiode (600, 610) jeweils wiederholt bzw. unmittelbar aufeinanderfolgend wiederholt ablaufen.

7. Kraftfahrzeug, umfassend ein Leuchtmittel (500), welches zumindest einen ersten und einen zweiten Zustand mit jeweils unterschiedlichem Lichtstrom, beispielsweise einen eingeschalteten und einen ausgeschalteten Zustand, aufweist, einer Verarbeitungseinheit (700) und eines Bildaufnahmesystems (100) mit zumindest einem lichtsensitiven Bildsensor (110), welches Kraftfahrzeug eingerichtet ist, das Verfahren gemäß einem der Ansprüche 1 bis 6 auszuführen.

8. Kraftfahrzeugscheinwerfer, umfassend ein Leuchtmittel (500), welches zumindest einen ersten und einen zweiten Zustand mit jeweils unterschiedlichem Lichtstrom, beispielsweise einen eingeschalteten und einen ausgeschalteten Zustand, aufweist, einer Verarbeitungseinheit (700) und eines Bildaufnahmesystems (100) mit zumindest einem lichtsensitiven Bildsensor (110), welches Kraftfahrzeug eingerichtet ist, das Verfahren gemäß einem der Ansprüche 1 bis 6 auszuführen.

## Claims

1. Method for increasing the contrast level of images of an environment, the method comprising the steps of:
(a) providing a light emitting means (500) capable of assuming at least a first and a second state each having a different luminous flux, for example an on state and an off state, a processing unit (700) and an image capturing system (100) having at least one light sensitive image sensor (110),
b) producing image recordings (300, 400) of the environment by means of the image recording system (100), wherein the at least one image sensor (110) is exposed in a predeterminable exposure period (200), wherein within an exposure period (200) at least a first and a second image recording (300, 400) are produced, each with a fixable exposure time (310, 410), wherein the illuminant (500) is exposed in a predeterminable illumination period (600, 610), which is composed of the duration of the first and the second state, into its first and then into its second state, the illumination period (600, 610) of the illuminating means (500) being longer or shorter than the exposure period (200) of the image recording system (100), so that the first and the second image recording (300, 400) have a different contrast range,
c) creating at least one image composition (800) by means of the processing unit (700), wherein the at least one first and second image recording (300, 400) are superimposed on an exposure period, wherein the at least one image composition (800) has a greater contrast range compared to the at least one first and second image recording (300, 400),
**characterized in that**
the illuminating means (500) comprises at least one light emitting diode which is dimmable by means of pulse width modulation, wherein the illuminating means (500) is designed as a motor vehicle headlamp, and wherein the frequency of the light output by means of pulse width modulation is higher than 60 Hz, and wherein
the illuminating means (500), the processing unit (700) and the image recording system (100) are installed in a motor vehicle, preferably in a motor vehicle headlamp which is installed in a motor vehicle, wherein
the length of the illumination period and the exposure period is shortened when the driving speed is increased and increased when the driving speed is reduced.

2. Method according to claim 1, **characterized in that** the exposure times (310, 410) for creating the at least one first and second image recording (300, 400) in an exposure period (200) are of equal length.

3. Method according to claim 1, **characterized in that** the exposure times (320, 420) for producing the at least one first and second image recording (300, 400) in an exposure period (200) are of different lengths.

4. Method according to any one of claims 1 to 3, **characterized in that** the image capture system (100) comprises a further image sensor (120), wherein the first image sensor (110) creates the first image capture (300) and the further image sensor (120) creates the second image capture (400) in one exposure period (200).

5. Method according to claim 4, **characterized in that** the at least one first and the second image recording (300, 400) are created simultaneously in the sense of a common starting point with different exposure times (310, 410).

6. Method according to any one of claims 1 to 5, **characterized in that** the exposure period (200) and the illumination period (600, 610) are each repeated or run repeatedly in immediate succession.

7. Motor vehicle, comprising a lighting means (500) having at least a first and a second state with respectively different luminous flux, for example an on state and an off state, a processing unit (700) and an image recording system (100) with at least one light-sensitive image sensor (110), which motor vehicle is arranged to carry out the method according to one of claims 1 to 6.

8. Motor vehicle headlamp, comprising a luminous means (500) having at least a first and a second state with respectively different luminous flux, for example an on state and an off state, a processing unit (700) and an image recording system (100) with at least one light-sensitive image sensor (110), which motor vehicle is arranged to carry out the method according to one of claims 1 to 6.

## Revendications

1. Méthode pour augmenter le niveau de contraste des images d'un environnement, la méthode comprenant les étapes suivantes
(a) fournir une source de lumière (500) capable d'assumer au moins un premier et un second état, chacun ayant un flux lumineux différent, par exemple un état allumé et un état éteint, une unité de traitement (700) et un système d'acquisition d'images (100) comprenant au moins un capteur d'images photosensible (110),
b) réalisation d'enregistrements d'images (300, 400) de l'environnement au moyen du système d'enregistrement d'images (100), le au moins un capteur d'images (110) étant exposé pendant une durée d'exposition (200) pouvant être prédéterminée, au moins un premier et un deuxième enregistrement d'images (300, 400) étant réalisés pendant une durée d'exposition (200), avec chacun une durée d'exposition (310, 410) pouvant être fixée, le moyen d'éclairage (500) étant exposé pendant une durée d'éclairage (600) pouvant être prédéterminée, 610), qui se compose de la durée du premier et du second état, dans son premier puis dans son second état, la période d'éclairage (600, 610) du moyen d'éclairage (500) étant plus longue ou plus courte que la période d'exposition (200) du système d'enregistrement d'images (100), de sorte que le premier et le second enregistrement d'images (300, 400) ont une plage de contraste différente,
c) création d'au moins une composition d'image (800) au moyen de l'unité de traitement (700), le au moins un premier et un deuxième enregistrement d'image (300, 400) étant superposés à une période d'exposition, la au moins une composition d'image (800) ayant une plage de contraste plus grande que le au moins un premier et un deuxième enregistrement d'image (300, 400) **caractérisé en ce que**
le moyen d'éclairage (500) comprend au moins une diode électroluminescente qui peut être atténuée au moyen d'une modulation de largeur d'impulsion, le moyen d'éclairage (500) étant conçu comme un phare de véhicule automobile, et la fréquence de la lumière émise au moyen de la modulation de largeur d'impulsion étant supérieure à 60 Hz, et dans lequel
le moyen d'éclairage (500), l'unité de traitement (700) et le système d'enregistrement d'images (100) sont installés dans un véhicule automobile, de préférence dans un projecteur de véhicule automobile qui est installé dans un véhicule automobile, dans lequel
la durée de la période d'éclairage et la durée d'exposition sont raccourcies lorsque la vitesse de conduite est augmentée et augmentées lorsque la vitesse de conduite est réduite.

2. Procédé selon la revendication 1, **caractérisé en ce que** les périodes d'éclairage (310, 410) pour la production d'au moins une première et une deuxième exposition d'image (300, 400) dans une période d'éclairage (200) sont de longueur égale.

3. Procédé selon la revendication 1, **caractérisé en ce que** les temps d'exposition (320, 420) pour la production d'au moins une première et une deuxième capture d'image (300, 400) dans une période d'exposition (200) sont de longueurs différentes.

4. Procédé selon l'une quelconque des revendications 1 à 3, **caractérisé en ce que** le système de capture d'image (100) comprend un autre capteur d'image (120), dans lequel le premier capteur d'image (110) crée la première capture d'image (300) et l'autre capteur d'image (120) crée la deuxième capture d'image (400) en une période d'exposition (200).

5. Procédé selon la revendication 4, **caractérisée en ce que** la au moins une première et la au moins une deuxième capture d'image (300, 400) sont créées simultanément en fonction d'un point de départ commun avec des temps d'exposition différents (310, 410).

6. Procédé selon l'une quelconque des revendications 1 à 5, **caractérisée en ce que** la période d'exposition (200) et la période d'illumination (600, 610) sont chacune répétées ou se déroulent de manière répétée en succession immédiate.

7. Véhicule automobile, comprenant un moyen d'éclairage (500) ayant au moins un premier et un deuxième état avec respectivement un flux lumineux différent, par exemple un état allumé et un état éteint, une unité de traitement (700) et un système d'acquisition d'images (100) avec au moins un capteur sur image

8. Phare de véhicule automobile comprenant un moyen d'éclairage (500) ayant au moins un premier et un deuxième état avec un flux lumineux respectivement différent, par exemple un état allumé et un état éteint, une unité de traitement (700) et un système d'enregistrement d'image (100) avec au moins un capteur d'image photosensible (110), lequel véhicule automobile est agencé pour mettre en oeuvre la méthode selon l'une des revendications 1 à 6.
